# EUROPEAN PATENT APPLICATION

(11) **EP 3 739 967 A1**
(43) Date of publication of application: **18.11.2020**
(21) Application number: 18900502.8
(22) Date of filing: 09.01.2018
(51) Int. Cl.: H04W 52/02

(54) **METHOD AND APPARATUS FOR CONTROLLING OPERATING MODE, AND COMPUTER STORAGE MEDIUM**

(71) Applicant: GUANGDONG OPPO MOBILE TELECOMMUNICATIONS CORP., LTD., Wusha, Chang'an Dongguan, Guangdong 523860 (CN)
(72) Inventor: LIU, Jianhua, Dongguan, Guangdong 523860 (CN)
(74) Representative: Ziebig & Hengelhaupt Patent- und Rechtsanwaltskanzlei PartG mbB
(86) International application number: PCT/CN2018/071857
(87) International publication number: WO 2019/136583

(57) **Abstract**

Disclosed in the present invention are a method and apparatus for controlling an operating mode, and a computer storage medium. The method comprises: a terminal negotiates with a network device to leave a first operating mode in an inactive state. A terminal negotiates with a network device to leave a first operating mode in an inactive state.

## Description

### TECHNICAL FIELD

The disclosure relates to the technical field of power saving of a terminal, and particularly to a method and device for controlling an operation mode and a computer storage medium.

### BACKGROUND

For reducing power consumption of the terminal, the terminal may enter an idle state and further enter a power saving mode when there is no date to be sent by the terminal. The terminal does not execute any operation in the power saving mode, like in an off state (called as a sleep state). When the terminal is required to execute data transmission or region updating, the terminal actively establishes a connection with a network. When the terminal is in the power saving mode, the terminal is in an unreachable state in relative to a network. If there is called data, the network may send the called data to the terminal when the terminal executes data transmission or region updating. An inactive state is introduced into a 5th Generation (5G) system. When the terminal is in the inactive state, a context of the terminal is stored on a network side, and when the terminal is required to transmit data, the terminal and the network side recover the context of the terminal, thereby saving data transmission time.

At present, the power saving mode of the terminal is only limited to be in the idle state, and power consumption of the terminal is required to be further reduced in the inactive state. In addition, if the power saving mode of the terminal is introduced in the inactive state, how to control the power saving mode of the terminal in the inactive state is a problem to be solved.

### SUMMARY

For solving the above technical problem, the embodiments of the disclosure provide a method and device for controlling an operation mode and a computer storage medium.

The embodiments of the disclosure provide a method for controlling an operation mode, which may include the following operation.

A terminal performs negotiation with a network device for leaving, in an inactive state, a first operation mode.

In an embodiment of the disclosure, the operation that the terminal performs negotiation with the network device for leaving in the inactive state the first operation mode may include the following operations.

The terminal in the inactive state sends a first request message to the network device. The first request message is configured to request to leave the first operation mode.

The terminal receives a first response message sent by the network device. The first response message is configured to indicate whether the first request message is rejected or the first request message is accepted.

If the first response message is configured to indicate that the first request message is accepted, the terminal leaves the first operation mode.

In an embodiment of the disclosure, the operation that the terminal in the inactive state sends the first request message to the network device may include the following operation.

When the terminal in the inactive state is required to wake up from a sleep state in the first operation mode to communicate with a network, the terminal sends the first request message to the network device.

In the embodiments of the disclosure, the operation that the terminal performs negotiation with the network device for leaving in the inactive state the first operation mode may include the following operations.

The terminal in the inactive state receives instruction information sent by the network device. The instruction information is configured to instruct the terminal to leave the first operation mode.

The terminal leaves the first operation mode based on the instruction information.

In an embodiment of the disclosure, the operation that the terminal in the inactive state receives the instruction information sent by the network device may include the following operation.

When the terminal in the inactive state is required to wake up from the sleep state in the first operation mode to communicate with the network, the terminal receives the instruction information sent by the network device.

In an embodiment of the disclosure, the operation that the terminal receives the instruction information sent by the network device may include the following operation.

The terminal receives instruction information, sent by an access network element, from a core network element.

In an embodiment of the disclosure, the instruction information may be carried in data sent to the access network element by the core network element.

In an embodiment of the disclosure, the instruction information from the core network element may be instruction information from a core network control-plane element or instruction information from a core network user-plane element.

In the embodiments of the disclosure, the instruction information may include Quality of Service (QoS) information.

In the embodiments of the disclosure, the operation that the terminal performs negotiation with the network device for leaving in the inactive state the first operation mode may include the following operations.

The terminal performs negotiation with the network device for a first timer corresponding to the first operation mode in the inactive state.

If the first timer expires, the terminal leaves the first operation mode.

In the embodiments of the disclosure, the method may further include the following operation.

When the terminal enters the first operation mode, the first timer is restarted.

In the embodiments of the disclosure, leaving the first operation mode may refer to wakening the terminal from the sleep state in the first operation mode.

In the embodiments of the disclosure, the terminal may not execute at least one of the following operations in the first operation mode: a measurement operation, a cell selection operation, a cell reselection operation, a beam selection operation, a beam reselection operation, an uplink signal sending operation and a downlink signal receiving operation.

The embodiments of the disclosure provide a method for controlling an operation mode, which may include the following operation.

A network device performs negotiation with a terminal for leaving, in an inactive state, a first operation mode.

In an embodiment of the disclosure, the operation that the network device performs negotiation with the terminal for leaving in the inactive state the first operation mode may include the following operations.

The network device receives a first request message sent by the terminal in the inactive state. The first request message is configured to request to leave the first operation mode.

The network device sends a first response message to the terminal. The first response message is configured to indicate whether the first request message is rejected or the first request message is accepted.

In an embodiment of the disclosure, the operation that the network device performs negotiation with the terminal for leaving in the inactive state the first operation mode may include the following operation.

The network device sends instruction information to the terminal in the inactive state. The instruction information is configured to instruct the terminal to leave the first operation mode.

In the embodiments of the disclosure, the operation that the network device sends the instruction information to the terminal in the inactive state may include the following operations.

A core network element sends instruction information to an access network element.

The access network element sends the instruction information to the terminal.

In the embodiments of the disclosure, the instruction information may be carried in data sent to the access network element by the core network element.

In the embodiments of the disclosure, the core network element may be a core network control-plane element or a core network user-plane element.

In the embodiments of the disclosure, the instruction information may include QoS information.

In an embodiment of the disclosure, the operation that the network device performs negotiation with the terminal for leaving in the inactive state the first operation mode may include the following operation.

The network device performs negotiation with the terminal for a first timer corresponding to the first operation mode in the inactive state. The terminal is triggered to leave the first operation mode if the first timer expires.

In an embodiment of the disclosure, leaving the first operation mode may refer to wakening the terminal from a sleep state in the first operation mode.

In an embodiment of the disclosure, the terminal may not execute at least one of the following operations in the first operation mode: a measurement operation, a cell selection operation, a cell reselection operation, a beam selection operation, a beam reselection operation, an uplink signal sending operation and a downlink signal receiving operation.

The embodiments of the disclosure provide a device for controlling an operation mode, which may be applied to a terminal and include a negotiation unit.

The negotiation unit may be configured to perform negotiation with a network device for leaving, in an inactive state, a first operation mode.

In the embodiments of the disclosure, the negotiation unit may include a sending subunit, a first receiving subunit and a first mode control subunit.

The sending subunit may be configured to send, in the inactive state, a first request message to the network device. The first request message is configured to request to leave the first operation mode.

The first receiving subunit may be configured to receive a first response message sent by the network device. The first response message is configured to indicate whether the first request message is rejected or the first request message is accepted.

The first mode control subunit may be configured to, if the first response message is configured to indicate that the first request message is accepted, leave the first operation mode.

In the embodiments of the disclosure, the sending subunit may be configured to, when it is required in the inactive state to wake up from a sleep state in the first operation mode to communicate with a network, send the first request message to the network device.

In the embodiments of the disclosure, the negotiation unit may include a second receiving subunit and a second mode control subunit.

The second receiving subunit may be configured to receive, in the inactive state, instruction information sent by the network device. The instruction information is configured to instruct the terminal to leave the first operation mode.

The second mode control subunit may be configured to leave the first operation mode based on the instruction information.

In the embodiments of the disclosure, the second receiving subunit may be configured to, when it is required in the inactive state to wake up from the sleep state in the first operation mode to communicate with the network, receive the instruction information sent by the network device.

In the embodiments of the disclosure, the second receiving subunit may be configured to receive the instruction information, sent by an access network element, from a core network element.

In the embodiments of the disclosure, the instruction information may be carried in data sent to the access network element by the core network element.

In the embodiments of the disclosure, the instruction information from the core network element may be instruction information from a core network control-plane element or instruction information from a core network user-plane element.

In the embodiments of the disclosure, the instruction information may include QoS information.

In the embodiments of the disclosure, the negotiation unit may include a negotiation subunit and a third mode control subunit.

The negotiation subunit may be configured to perform negotiation with the network device for a first timer corresponding to the first operation mode in the inactive state.

The third mode control subunit may be configured to, if the first timer expires, leave the first operation mode.

In the embodiments of the disclosure, the third mode control subunit may further be configured to, when the terminal enters the first operation mode, restart the first timer.

In the embodiments of the disclosure, leaving the first operation mode may refer to wakening the terminal from the sleep state in the first operation mode.

In the embodiments of the disclosure, the terminal may not execute at least one of the following operations in the first operation mode: a measurement operation, a cell selection operation, a cell reselection operation, a beam selection operation, a beam reselection operation, an uplink signal sending operation and a downlink signal receiving operation.

The embodiments of the disclosure provide a device for controlling an operation mode, which may be applied to a network device and include a negotiation unit.

The negotiation unit may be configured to perform negotiation with a terminal for leaving, in an inactive state, a first operation mode.

In the embodiments of the disclosure, the negotiation unit may include a receiving subunit and a first sending subunit.

The receiving subunit may be configured to receive a first request message sent by the terminal in the inactive state. The first request message is configured to request to leave the first operation mode.

The first sending subunit may be configured to send a first response message to the terminal. The first response message is configured to indicate whether the first request message is rejected or the first request message is accepted.

In the embodiments of the disclosure, the negotiation unit may be configured to send instruction information to the terminal in the inactive state. The instruction information is configured to instruct the terminal to leave the first operation mode.

In the embodiments of the disclosure, the negotiation unit may include a core network sending subunit and an access network sending subunit.

The core network sending subunit may be configured to send instruction information to an access network element.

The access network sending subunit may be configured to send the instruction information to the access network sending subunit.

In the embodiments of the disclosure, the instruction information may be carried in data sent to the access network element by the core network element.

In the embodiments of the disclosure, the core network element may be a core network control-plane element or a core network user-plane element.

In the embodiments of the disclosure, the instruction information may include QoS information.

In the embodiments of the disclosure, the negotiation unit may be configured to perform negotiation with the terminal for a first timer corresponding to the first operation mode in the inactive state. The terminal is triggered to leave the first operation mode if the first timer expires.

In the embodiments of the disclosure, leaving the first operation mode may refer to wakening the terminal from a sleep state in the first operation mode

In the embodiments of the disclosure, the terminal may not execute at least one of the following operations in the first operation mode: a measurement operation, a cell selection operation, a cell reselection operation, a beam selection operation, a beam reselection operation, an uplink signal sending operation and a downlink signal receiving operation.

The embodiments of the disclosure provide a computer storage medium having stored thereon a computer-executable instruction. The computer-executable instruction is executed by a processor to implement the method for controlling an operation mode.

In the technical solutions of the embodiments of the disclosure, the terminal performs negotiation with the network device for leaving in the inactive state the first operation mode. Herein, the first operation mode is a power saving mode. With the technical solutions of the embodiments of the disclosure, the power saving mode is entered in the inactive state, thereby saving power consumption of the terminal. In addition, the terminal leaves the power saving mode when there is a service requirement, thereby ensuring communication performance of a service.

### BRIEF DESCRIPTION OF THE DRAWINGS

The drawings described herein are adopted to provide a further understanding to the disclosure and form a part of the application. Schematic embodiments of the disclosure and descriptions thereof are adopted to explain the disclosure and not intended to form improper limits to the disclosure. In the drawings:
FIG. 1 is an architecture diagram of a 5G network system according to an embodiment of the disclosure.
FIG. 2 is a first flowchart of a method for controlling an operation mode according to an embodiment of the disclosure.
FIG. 3 is a second flowchart of a method for controlling an operation mode according to an embodiment of the disclosure.
FIG. 4 is a first structure composition diagram of a device for controlling an operation mode according to an embodiment of the disclosure.
FIG. 5 is a second structure composition diagram of a device for controlling an operation mode according to an embodiment of the disclosure.
FIG. 6 is a structure composition diagram of a computer device according to an embodiment of the disclosure.

### DETAILED DESCRIPTION

For making the characteristics and technical contents of the embodiments of the disclosure understood in more detail, implementation of the embodiments of the disclosure will be described below in combination with the drawings in detail. The drawings are only adopted for reference description and not intended to limit the embodiments of the disclosure.

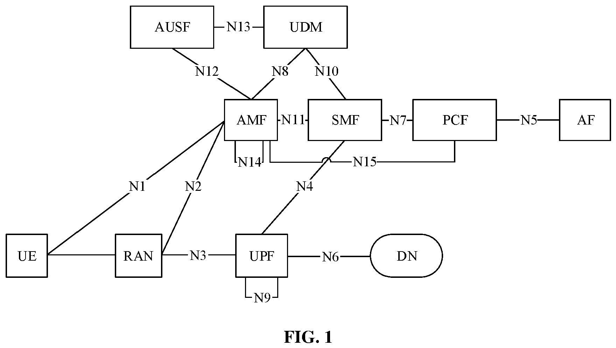

FIG. 1 is an architecture diagram of a 5G network system according to an embodiment of the disclosure. As shown in FIG. 1, devices involved in a 5G network system include: a user equipment (UE), a Radio Access Network (RAN), a User Plane Function (UPF), a Data Network (DN), a Core Access and Mobility Management Function (AMF), a Session Management Function (SMF), a Policy Control Function (PCF), an Application Function (AF), an Authentication Server Function (AUSF) and Unified Data Management (UDM).

The example in FIG. 1 is a case of network architecture for implementing the embodiments of the disclosure. The embodiments of the disclosure are not limited to the network structure of FIG. 1.

In the 5G system, for achieving a small control-plane delay, for example, 10ms, a new intermediate state, i.e., inactive state (or deactivated state), is introduced among the existing connected state and idle state in 4th Generation (4G). In the inactive state, the connected state with a core network is reserved, and the connected state with a wireless side is deleted. When necessary, a connection with the wireless side may be quickly established, thereby greatly reducing a delay in switching from an original idle state to the connected state.

According to the technical solutions of the embodiments of the disclosure, a power saving mode, i.e., a first operation mode, is entered in the inactive state.

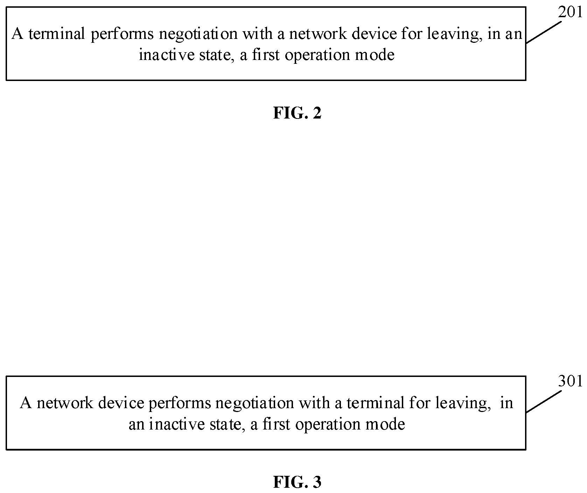

FIG. 2 is a first flowchart of a method for controlling an operation mode according to an embodiment of the disclosure. As shown in FIG. 2, the method for controlling an operation mode includes the following operation.

In 201, a terminal performs negotiation with a network device for leaving, in an inactive state, a first operation mode.

Herein, power consumption in the first operation mode is small, and the first operation mode is actually a power saving mode.

In the embodiment of the disclosure, the terminal does not execute at least one of the following operations in the first operation mode: a measurement operation, a cell selection operation, a cell reselection operation, a beam selection operation, a beam reselection operation, an uplink signal sending operation and a downlink signal receiving operation.

In the embodiment of the disclosure, the operation that the terminal performs negotiation with the network device for leaving in the inactive state the first operation mode may be implemented through the following manners.

In a first manner, the terminal in the inactive state sends a first request message to the network device. The first request message is configured to request to leave the first operation mode. The terminal receives a first response message sent by the network device. The first response message is configured to indicate whether the first request message is rejected or the first request message is accepted. If the first response message is configured to indicate that the first request message is accepted, the terminal leaves the first operation mode.

In an implementation mode, when the terminal in the inactive state is required to wake up from a sleep state in the first operation mode to communicate with a network, the terminal sends the first request message to the network device.

In a second manner, the terminal in the inactive state receives instruction information sent by the network device, and the instruction information is configured to instruct the terminal to leave the first operation mode. The terminal leaves the first operation mode based on the instruction information.

In an implementation mode, when the terminal in the inactive state is required to wake up from the sleep state in the first operation mode to communicate with the network, the terminal receives the instruction information sent by the network device.

In an implementation mode, the terminal receives the instruction information, sent by an access network element, from a core network element.

In an implementation mode, the instruction information is carried in data sent to the access network element by the core network element.

In an implementation mode, the instruction information from the core network element is instruction information from a core network control-plane element or instruction information from a core network user-plane element. Furthermore, the instruction information may be explicit instruction information which directly instructs the terminal to leave the first operation mode. The instruction information may also be implicit instruction which instructs the terminal to leave the first operation mode through QoS information (for example, delay information).

In a third manner, the terminal performs negotiation with the network device for a first timer corresponding to the first operation mode in the inactive state. If the first timer expires, the terminal leaves the first operation mode.

In an implementation mode, when the terminal enters the first operation mode, the first timer is restarted.

In the embodiment of the disclosure, leaving the first operation mode refers to wakening the terminal from the sleep state in the first operation mode.

FIG. 3 is a second flowchart of a method for controlling an operation mode according to an embodiment of the disclosure. As shown in FIG. 3, the method for controlling an operation mode includes the following operation.

In 301, a network device performs negotiation with a terminal for leaving, in an inactive state, a first operation mode.

Herein, power consumption in the first operation mode is small, and the first operation mode is actually a power saving mode.

In the embodiment of the disclosure, the terminal does not execute at least one of the following operations in the first operation mode: a measurement operation, a cell selection operation, a cell reselection operation, a beam selection operation, a beam reselection operation, an uplink signal sending operation and a downlink signal receiving operation.

In the embodiment of the disclosure, the operation that the network device performs negotiation with the terminal for leaving in the inactive state the first operation mode may be implemented through the following manners.

In a first manner, the network device receives a first request message sent by the terminal in the inactive state. The first request message is configured to request to leave the first operation mode. The network device sends a first response message to the terminal. The first response message is configured to indicate whether the first request message is rejected or the first request message is accepted.

In a second manner, the network device sends instruction information to the terminal in the inactive state, and the instruction information is configured to instruct the terminal to leave the first operation mode.

In an implementation mode, a core network element sends instruction information to an access network element, and the core network element sends instruction information to the access network element.

In an embodiment, the instruction information is carried in data sent to the access network element by the core network element.

In an implementation mode, the core network element is a core network control-plane element or a core network user-plane element. Furthermore, the instruction information may be explicit instruction information which directly instructs the terminal to leave the first operation mode. The instruction information may also be implicit instruction information which instructs the terminal to leave the first operation mode through QoS information (for example, delay information).

In a third manner, the network device performs negotiation with the terminal for a first timer corresponding to the first operation mode in the inactive state. The terminal is triggered to leave the first operation mode if the first timer expires.

In the embodiment of the disclosure, leaving the first operation mode refers to wakening the terminal from a sleep state in the first operation mode.

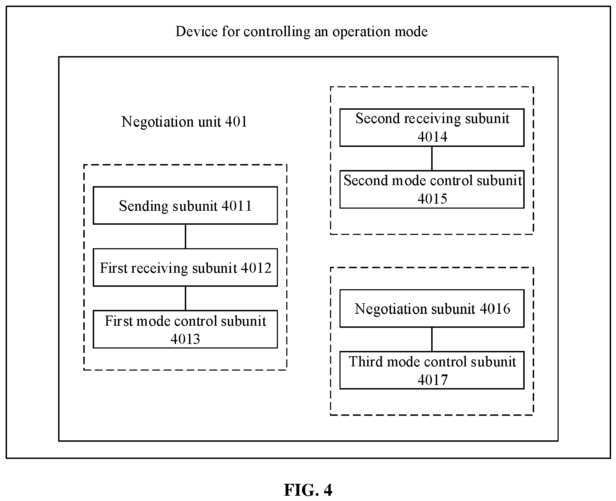

FIG. 4 is a first structure composition diagram of a device for controlling an operation mode according to an embodiment of the disclosure. The device for controlling an operation mode of the embodiment is applied to a terminal. As shown in FIG. 4, the device includes a negotiation unit 401.

The negotiation unit 401 is configured to perform negotiation with a network device for leaving, in an inactive state, a first operation mode.

In an implementation mode, the negotiation unit 401 includes a sending subunit 4011, a first receiving subunit 4012 and a first mode control subunit 4013.

The sending subunit 4011 is configured to send, in the inactive state, a first request message to the network device. The first request message is configured to request to leave the first operation mode.

The first receiving subunit 4012 is configured to receive a first response message sent by the network device. The first response message is configured to indicate whether the first request message is rejected or the first request message is accepted.

The first mode control subunit 4013 is configured to, if the first response message is configured to indicate that the first request message is accepted, leave the first operation mode.

In an implementation mode, the sending subunit 4011 is configured to, when the terminal in the inactive state is required to wake up from a sleep state in the first operation mode to communicate with a network, send the first request message to the network device.

In an implementation mode, the negotiation unit 401 includes a second receiving subunit 4014 and a second mode control subunit 4015.

The second receiving subunit 4014 is configured to receive, in the inactive state, instruction information sent by the network device. The instruction information is configured to instruct the terminal to leave the first operation mode.

The second mode control subunit 4015 is configured to leave the first operation mode based on the instruction information.

In an implementation mode, the second receiving subunit 4014 is configured to, when the terminal in the inactive state is required to wake up from the sleep state in the first operation mode to communicate with the network, receive the instruction information sent by the network device.

In an implementation mode, the second receiving subunit 4014 is configured to receive the instruction information, sent by an access network element, from a core network element.

In an implementation mode, the instruction information is carried in data sent to the access network element by the core network element.

In an implementation mode, the instruction information from the core network element is instruction information from a core network control-plane element or instruction information from a core network user-plane element.

In an implementation mode, the instruction information includes QoS information.

In an implementation mode, the negotiation unit 401 includes a negotiation subunit 4016 and a third mode control subunit 4017.

The negotiation subunit 4016 is configured to perform negotiation with the network device for a first timer corresponding to the first operation mode in the inactive state.

The third mode control subunit 4017 is configured to, if the first timer expires, leave the first operation mode.

In an implementation mode, the third mode control subunit 4017 is further configured to, when the terminal enters the first operation mode, restart the first timer.

In an implementation mode, leaving the first operation mode refers to wakening the terminal from the sleep state in the first operation mode.

In the embodiment of the disclosure, the terminal does not execute at least one of the following operations in the first operation mode: a measurement operation, a cell selection operation, a cell reselection operation, a beam selection operation, a beam reselection operation, an uplink signal sending operation and a downlink signal receiving operation.

Those skilled in the art should know that functions realized by each unit in the device for controlling an operation mode shown in FIG. 4 may be understood with reference to related descriptions about the method for controlling an operation mode. The functions of each unit in the device for controlling an operation mode shown in FIG. 4 may be realized through a program running in a processor, and may also be realized through a specific logical circuit.

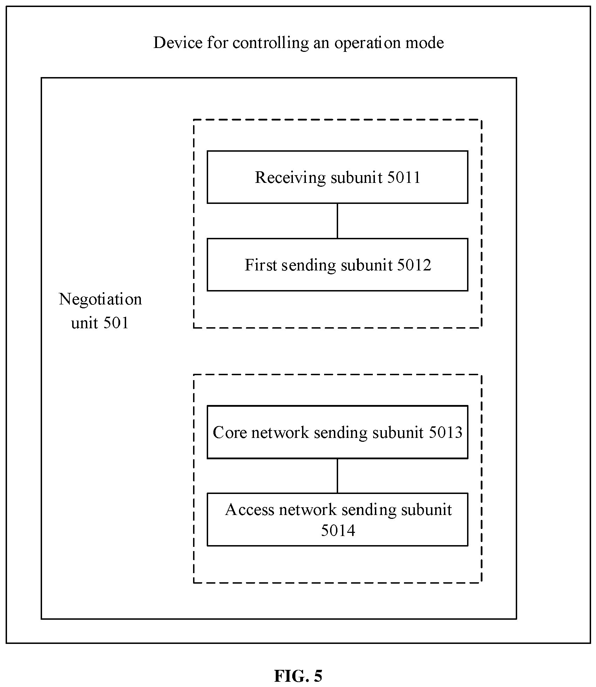

FIG. 5 is a second structure composition diagram of a device for controlling an operation mode according to an embodiment of the disclosure. The device for controlling an operation mode of the embodiment is applied to a network device. As shown in FIG. 5, the device includes a negotiation unit 501.

The negotiation unit 501 is configured to perform negotiation with a terminal for leaving, in an inactive state, a first operation mode.

In an implementation mode, the negotiation unit 501 includes a receiving subunit 5011 and a first sending subunit 5012.

The receiving subunit 5011 is configured to receive a first request message sent by the terminal in the inactive state. The first request message is configured to request to leave the first operation mode.

The first sending subunit 5012 is configured to send a first response message to the terminal. The first response message is configured to indicate whether the first request message is rejected or the first request message is accepted.

In an implementation mode, the negotiation unit 501 is configured to send instruction information to the terminal in the inactive state. The instruction information is configured to instruct the terminal to leave the first operation mode.

In an implementation mode, the negotiation unit 501 includes a core network sending subunit 5013 and an access network sending subunit 5014.

The core network sending subunit 5013 is configured to send the instruction information to an access network element.

The access network sending subunit 5014 is configured to send the instruction information to the access network element.

In an implementation mode, the instruction information is carried in data sent to the access network element by a core network element.

In an implementation mode, the core network element is a core network control-plane element or a core network user-plane element.

In an implementation mode, the instruction information includes QoS information.

In an implementation mode, the negotiation unit 501 is configured to perform negotiation with the terminal for a first timer corresponding to the first operation mode in the inactive state. The terminal is triggered to leave the first operation mode if the first timer expires.

In an implementation mode, leaving the first operation mode refers to wakening the terminal from a sleep state in the first operation mode.

In the embodiment of the disclosure, the terminal does not execute at least one of the following operations in the first operation mode: a measurement operation, a cell selection operation, a cell reselection operation, a beam selection operation, a beam reselection operation, an uplink signal sending operation and a downlink signal receiving operation.

Those skilled in the art should know that functions realized by each unit in the device for controlling an operation mode shown in FIG. 5 may be understood with reference to related descriptions about the method for controlling an operation mode. The functions of each unit in the device for controlling an operation mode shown in FIG. 5 may be realized through a program running in a processor, and may also be realized through a specific logical circuit.

When being implemented in form of software functional module and sold or used as an independent product, the device for controlling an operation mode of the embodiment of the disclosure may be stored in a computer-readable storage medium. Based on such an understanding, the essential parts of the technical solutions of the embodiments of the disclosure or parts of the technical solutions of the embodiments of the disclosure making contributions to the conventional art may be embodied in form of software product, and the computer software product is stored in a storage medium, and includes a plurality of instructions configured to enable a computer device (which may be a personal computer, a server, a network device or the like) to execute all or a part of the method in each embodiment of the disclosure. The storage medium includes: various media capable of storing program codes such as a U disk, a mobile hard disk, a Read Only Memory (ROM), a magnetic disk or an optical disk. Therefore, the embodiments of the disclosure are not limited to any specific hardware and software combination.

Correspondingly, the embodiments of the disclosure also provide a computer storage medium, in which a computer-executable instruction is stored, the computer-executable instruction being executed by a processor to implement the method for controlling an operation mode of the embodiments of the disclosure.

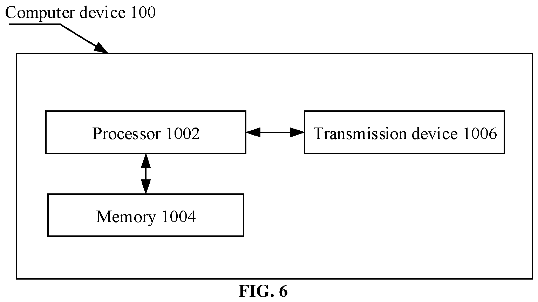

FIG. 6 is a structure diagram of a computer device according to an embodiment of the disclosure. The computer device may be a terminal or may also be a network device. As shown in FIG. 6, the computer device 100 may include one or more (only one processor is shown in FIG. 6) processors 1002 (the processor 1002 may include, but be not limited to, a processing device such as a Micro Control Unit (MCU) or a Field Programmable Gate Array (FPGA)), a memory 1004 configured to store data and a transmission device 1006 configured for a communication function. Those of ordinary skill in the art should know that the structure shown in FIG. 6 is only schematic and not intended to limit the structure of the electronic device. For example, the computer device 100 may further include components more or fewer than the components shown in FIG. 6 or has a configuration different from that shown in FIG. 6.

The memory 1004 may be configured to store a software program and a module of application software, for example, a program instruction/module corresponding to the method in the embodiments of the disclosure. The processor 1002 runs the software program and module stored in the memory 1004 to execute various functional applications and data processing, namely implementing the abovementioned method. The memory 1004 may include a high-speed random access memory and may also include a nonvolatile memory, for example, one or more magnetic storage devices, flash memories or other nonvolatile solid-state memories. In some examples, the memory 1004 may further include a memory arranged remotely relative to the processor 1002, and the remote memory may be connected to the computer device 100 through a network. An example of the network includes, but is not limited to, the Internet, an intranet, a local area network, a mobile communication network and a combination thereof.

The transmission device 1006 is configured to receive or send data through a network. A specific example of the network may include a wireless network provided by a communication provider of the computer device 100. In an example, the transmission device 1006 includes a Network Interface Controller (NIC), which may be connected with another network device through a base station, thereby communicating with the Internet. In an example, the transmission device 1006 may be a Radio Frequency (RF) module, configured to communicate with the Internet in a wireless manner.

The technical solutions recorded in the embodiments of the disclosure may be combined in any manner without conflicts.

In some embodiments provided by the disclosure, it is to be understood that the disclosed method and intelligent device may be implemented in another manner. The device embodiment described above is only schematic. For example, division of the units is only logic function division, and other division manners may be adopted during practical implementation. For example, multiple units or components may be combined or integrated into another system, or some characteristics may be neglected or not executed. In addition, coupling or direct coupling or communication connection between displayed or discussed components may be indirect coupling or communication connection, implemented through some interfaces, of the device or the units, and may be electrical and mechanical or adopt other forms.

The units described as separate parts may be or may not be physically separated, and parts displayed as units may be or may not be physical units, that is, may be located in the same place, or may also be distributed to multiple network units. A part or all of the units may be selected according to a practical requirement to achieve the purposes of the solutions of the embodiments.

In addition, the functional units in each embodiment of the disclosure may be all integrated into a second processing unit, each unit may also serve as an independent unit, or two or more than two units may also be integrated into a unit. The integrated unit may be implemented in a hardware form and may also be implemented in form of hardware and software functional unit.

The foregoing is only the specific implementation mode of the disclosure and not intended to limit the scope of protection of the disclosure. Any variations or replacements apparent to those skilled in the art within the technical scope disclosed by the disclosure shall fall within the scope of protection of the disclosure.

## Claims

1. A method for controlling an operation mode, comprising:
performing, by a terminal, negotiation with a network device for leaving, in an inactive state, a first operation mode.

2. The method of claim 1, wherein performing, by the terminal, negotiation with the network device for leaving in the inactive state the first operation mode comprises:
sending, by the terminal in the inactive state, a first request message to the network device, the first request message being configured to request to leave the first operation mode;
receiving, by the terminal, a first response message sent by the network device, the first response message being configured to indicate whether the first request message is rejected or the first request message is accepted; and
leaving, by the terminal, the first operation mode if the first response message is configured to indicate that the first request message is accepted.

3. The method of claim 2, wherein sending, by the terminal in the inactive state, the first request message to the network device comprises:
sending, by the terminal in the inactive state, the first request message to the network device when the terminal is required to wake up from a sleep state in the first operation mode to communicate with a network.

4. The method of claim 1, wherein performing, by the terminal, negotiation with the network device for leaving in the inactive state the first operation mode comprises:
receiving, by the terminal in the inactive state, instruction information sent by the network device, the instruction information being configured to instruct the terminal to leave the first operation mode; and
leaving, by the terminal, the first operation mode based on the instruction information.

5. The method of claim 4, wherein receiving, by the terminal in the inactive state, the instruction information sent by the network device comprises:
receiving, by the terminal in the inactive state, the instruction information sent by the network device when the terminal is required to wake up from the sleep state in the first operation mode to communicate with the network.

6. The method of claim 5, wherein receiving the instruction information sent by the network device comprises:
receiving, by the terminal, instruction information, sent by an access network element, from a core network element.

7. The method of claim 6, wherein the instruction information is carried in data sent to the access network element by the core network element.

8. The method of claim 6 or 7, wherein the instruction information from the core network element is instruction information from a core network control-plane element or instruction information from a core network user-plane element.

9. The method of claim 8, wherein the indication information comprises Quality of Service, QoS, information.

10. The method of claim 1, wherein performing, by the terminal, negotiation with the network device for leaving in the inactive state the first operation mode comprises:
performing, by the terminal, negotiation with the network device for a first timer corresponding to the first operation mode in the inactive state; and
leaving, by the terminal, the first operation mode if the first timer expires.

11. The method of claim 10, further comprising:
restarting the first timer when the terminal enters the first operation mode.

12. The method of any one of claims 1 to 11, wherein leaving the first operation mode refers to wakening the terminal from a sleep state in the first operation mode.

13. The method of any one of claims 1 to 12, wherein the terminal does not execute at least one of following operations in the first operation mode:
a measurement operation, a cell selection operation, a cell reselection operation, a beam selection operation, a beam reselection operation, an uplink signal sending operation or a downlink signal receiving operation.

14. A method for controlling an operation mode, comprising:
performing, by a network device, negotiation with a terminal for leaving, in an inactive state, a first operation mode.

15. The method of claim 14, wherein performing, by the network device, negotiation with the terminal for leaving in the inactive state the first operation mode comprises:
receiving, by the network device, a first request message sent by the terminal in the inactive state, the first request message being configured to request to leave the first operation mode; and
sending, by the network device, a first response message to the terminal, the first response message being configured to indicate whether the first request message is rejected or the first request message is accepted.

16. The method of claim 14, wherein performing, by the network device, negotiation with the terminal for leaving in the inactive state the first operation mode comprises:
sending, by the network device, instruction information to the terminal in the inactive state, the instruction information being configured to instruct the terminal to leave the first operation mode.

17. The method of claim 16, wherein sending, by the network device, the instruction information to the terminal in the inactive state comprises:
sending, by a core network element, instruction information to an access network element; and
sending, by the access network element, the instruction information to the terminal.

18. The method of claim 17, wherein the instruction information is carried in data sent to the access network element by the core network element.

19. The method of claim 17 or 18, wherein the core network element is a core network control-plane element or a core network user-plane element.

20. The method of claim 19, wherein the indication information comprises Quality of Service, QoS, information.

21. The method of claim 14, wherein performing, by the network device, negotiation with the terminal for leaving in the inactive state the first operation mode comprises:
performing, by the network device, negotiation with the terminal for a first timer corresponding to the first operation mode in the inactive state, wherein the terminal is triggered to leave the first operation mode if the first timer expires.

22. The method of any one of claims 14 to 21, wherein leaving the first operation mode refers to wakening the terminal from a sleep state in the first operation mode.

23. The method of any one of claims 14 to 22, wherein the terminal does not execute at least one of following operations in the first operation mode:
a measurement operation, a cell selection operation, a cell reselection operation, a beam selection operation, a beam reselection operation, an uplink signal sending operation or a downlink signal receiving operation.

24. A device for controlling an operation mode, applied to a terminal and comprising:
a negotiation unit, configured to perform negotiation with a network device for leaving, in an inactive state, a first operation mode.

25. The device of claim 24, wherein the negotiation unit comprises:
a sending subunit configured to send, in the inactive state, a first request message to the network device, the first request message being configured to request to leave the first operation mode;
a first receiving subunit configured to receive a first response message sent by the network device, the first response message being configured to indicate whether the first request message is rejected or the first request message is accepted; and
a first mode control subunit, configured to, if the first response message is configured to indicate that the first request message is accepted, leave the first operation mode.

26. The device of claim 25, wherein the sending subunit is configured to, when it is required in the inactive state to wake up from a sleep state in the first operation mode to communicate with a network, send the first request message to the network device.

27. The device of claim 24, wherein the negotiation unit comprises:
a second receiving subunit configured to receive, in the inactive state, instruction information sent by the network device, the instruction information being configured to instruct the terminal to leave the first operation mode; and
a second mode control subunit configured to leave the first operation mode based on the instruction information.

28. The device of claim 27, wherein the second receiving subunit is configured to, when it is required in the inactive state to wake up from a sleep state in the first operation mode to communicate with a network, receive the instruction information sent by the network device.

29. The device of claim 28, wherein the second receiving subunit is configured to receive instruction information, sent by an access network element, from a core network element.

30. The device of claim 29, wherein the instruction information is carried in data sent to the access network element by the core network element.

31. The device of claim 28 or 29, wherein the instruction information from the core network element is instruction information from a core network control-plane element or instruction information from a core network user-plane element.

32. The device of claim 31, wherein the indication information comprises Quality of Service, QoS, information.

33. The device of claim 24, wherein the negotiation unit comprises:
a negotiation subunit configured to perform negotiation with the network device for a first timer corresponding to the first operation mode in the inactive state; and
a third mode control subunit configured to, if the first timer expires, leave the first operation mode.

34. The device of claim 33, wherein the third mode control subunit is further configured to, when the terminal enters the first operation mode, restart the first timer.

35. The device of any one of claims 24 to 34, wherein leaving the first operation mode refers to wakening the terminal from a sleep state in the first operation mode.

36. The device of any one of claims 24 to 35, wherein the terminal does not execute at least one of following operations in the first operation mode:
a measurement operation, a cell selection operation, a cell reselection operation, a beam selection operation, a beam reselection operation, an uplink signal sending operation or a downlink signal receiving operation.

37. A device for controlling an operation mode, applied to a network device and comprising:
a negotiation unit, configured to perform negotiation with a terminal for leaving, in an inactive state, a first operation mode.

38. The device of claim 37, wherein the negotiation unit comprises:
a receiving subunit configured to receive a first request message sent by the terminal in the inactive state, the first request message being configured to request to leave the first operation mode; and
a first sending subunit, configured to send a first response message to the terminal, the first response message being configured to indicate whether the first request message is rejected or the first request message is accepted.

39. The device of claim 37, wherein the negotiation unit is configured to send instruction information to the terminal in the inactive state, the instruction information being configured to instruct the terminal to leave the first operation mode.

40. The device of claim 39, wherein the negotiation unit comprises:
a core network sending subunit configured to send instruction information to an access network element; and
an access network sending subunit configured to send the instruction information to the access network element.

41. The device of claim 40, wherein the instruction information is carried in data sent to the access network element by the core network element.

42. The device of claim 40 or 41, wherein the core network element is a core network control-plane element or a core network user-plane element.

43. The device of claim 42, wherein the indication information comprises Quality of Service, QoS, information.

44. The device of claim 37, wherein the negotiation unit is configured to perform negotiation with the terminal for a first timer corresponding to the first operation mode in the inactive state, wherein the terminal is triggered to leave the first operation mode if the first timer expires.

45. The device of any one of claims 37 to 44, wherein leaving the first operation mode refers to wakening the terminal from a sleep state in the first operation mode.

46. The device of any one of claims 37 to 45, wherein the terminal does not execute at least one of following operations in the first operation mode:
a measurement operation, a cell selection operation, a cell reselection operation, a beam selection operation, a beam reselection operation, an uplink signal sending operation or a downlink signal receiving operation.

47. A computer storage medium having stored thereon a computer-executable instruction, the computer-executable instruction being executed by a processor to implement the operations of the method of any one of claims 1 to 13 or the operations of the method of any one of claims 14 to 23.
